# EUROPÄISCHE PATENTSCHRIFT

(11) **EP 3 867 124 B1**
(45) Veröffentlichungstag und Bekanntmachung des Hinweises auf die Patenterteilung: **14.09.2022**
(21) Anmeldenummer: 19790184.6
(22) Anmeldetag: 16.10.2019
(51) Int. Cl.: B62D 5/04, F16C 25/08, F16C 19/54, F16C 27/06, F16F 1/02, F16F 1/32

(54) **ELEKTROMECHANISCHES LENKSYSTEM MIT EINEM FEDERELEMENT FÜR EIN UNTERSETZUNGSGETRIEBE DES LENKSYSTEMS**
ELECTRO MECHANICAL STEERING DEVICE WITH A SPRING ELEMENT FOR A REDUCTION GEAR OF THE STEERING DEVICE
SYSTEME DE DIRECTION ELECTROMECHANIQUE AVEC UN RESSORT POUR UN REDUCTEUR DU SYSTEME DE DIRECTION

(30) Priorität: 18.10.2018 DE 102018125887
(43) Veröffentlichungstag der Anmeldung: 25.08.2021
(73) Patentinhaber: thyssenkrupp Presta AG, 9492 Eschen (LI); thyssenkrupp AG, 45143 Essen (DE)
(72) Erfinder: BACHMANN, Andreas, 88085 Langenargen (DE); BURGER, Felix, 6800 Feldkirch (AT); GRAF, Martin, 9495 Triesen (LI); MÖLLER, Dirk, 9466 Sennwald (CH)
(74) Vertreter: thyssenkrupp Intellectual Property GmbH
(86) Internationale Anmeldenummer: PCT/EP2019/078105
(87) Internationale Veröffentlichungsnummer: WO 2020/079090

(56) Entgegenhaltungen:
- EP-A2- 1 645 761
- DE-A1- 19 811 784
- DE-A1- 19 960 277
- JP-A- 2001 280 428

## Beschreibung

Die vorliegende Erfindung betrifft ein elektromechanisches Lenksystem mit den Merkmalen des Oberbegriffs des Anspruchs 1.

In elektromechanischen Lenksystemen wird über einen Elektromotor ein Drehmoment erzeugt, das auf ein Getriebe übertragen und dort dem vom Fahrer gestellten Lenkmoment überlagert wird.

Eine gattungsgemäße elektromechanische Servolenkung weist einen elektrischen Servomotor auf, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind. Die Schneckenwelle ist mit der Motorwelle des elektrischen Servomotors über eine Kupplung verbunden.

Das Lager des Schneckenrades wird mittels eines Vorspannelements in Form einer Feder in axialer und radialer Richtung abgestützt und vorgespannt, wie es beispielsweise aus der Schrift JP 2001-280428 A bekannt ist. Damit kann allerdings keine konstante Vorspannung realisiert werden und es kommt zur Geräuschentwicklung durch Reibung. Für den Einsatz bekannte Wellfedern haben weiterhin den Nachteil, dass keine ebene (symmetrische) Lastverteilung möglich ist. Es entsteht ein Kippmoment durch das Ende und den Anfang der Windung. In der Einbausituation besteht die Gefahr von Beschädigung des Lagerschildes und es gibt nur einen geringen Weg in radialer Richtung um einen großen Federweg zu realisieren.

Es ist daher Aufgabe der vorliegenden Erfindung ein elektromechanisches Lenksystem mit einem Untersetzungsgetriebe anzugeben, das im Betrieb besonders geräuscharm ist und ein Vorspannelement eines Lagers aufweist, dass eine bessere Vorspannung und Lastverteilung bereitstellt.

Diese Aufgabe wird von einem elektromechanischen Lenksystem mit den Merkmalen des Anspruchs 1 gelöst. Vorteilhafte Weiterbildungen ergeben sich aus den Unteransprüchen.

Demnach ist ein elektromechanisches Lenksystem für ein Kraftfahrzeug, mit einem eine Schnecke und ein Schneckenrad umfassenden Untersetzungsgetriebe vorgesehen, wobei das Schneckenrad in einem Getriebegehäuse auf einer ersten Stirnseite in einem ersten Lager und auf einer zweiten Stirnseite in einem zweiten Lager um eine Längsachse drehbar gelagert ist, wobei beide Lager einen Außenring und einen Innenring aufweisen, zwischen denen Wälzkörper angeordnet sind, wobei die Innenringe auf einer von dem Schneckenrad angetriebenen Welle drehfest angeordnet sind und die Außenringe im Getriebegehäuse sitzen, und wobei in Richtung der Längsachse zwischen dem Innenring des zweiten Lagers und dem Schneckenrad ein Federelement angeordnet ist. Das Federelement weist einen zumindest teilringförmigen Grundkörper auf, der sich im eingebauten Zustand koaxial zur Längsachse erstreckt und von dessen Außenumfangsseite in Umfangsrichtung zur Längsachse beabstandete Federarme abgehen, wobei mindestens ein Federarm ein freies Ende aufweist, wobei der Federarm einen ersten Schenkel umfasst, welcher weg von der Längsachse weist, und einen zweiten Schenkel umfasst, welcher zumindest teilweise parallel zu der Längsachse verläuft, an welchem das freie Ende ausgebildet ist. Dadurch wird ermöglicht, dass in Längsrichtung eine kraftverteilte und damit spannungsarme Auflage bereitgestellt werden kann. Das Federelement mit den Federarmen kann eine gleichmäßige Vorspannung erzeugen ohne zu kippen, wodurch Geräusche reduziert werden können. Ein Ende des zweiten Schenkels weist eine andere axiale Position entlang der Längsachse als ein zweites Ende auf, wobei das zweite Ende bevorzugt weiter beabstandet zum Grundkörper ist als das erste Ende. Der zweite Schenkel verläuft zumindest teilweise parallel oder annährend parallel zur Längsachse. Es kann vorgesehen sein, dass lediglich ein Mittelabschnitt des zweiten Schenkels parallel zur Längsachse verläuft. Der zweite Schenkel kann planar oder abgerundet sein oder einen Winkel aufspannen. Der erste Schenkel und der zweite Schenkel spannen einen Winkel auf, welcher kleiner als 180° ist.

Das Lager ist als Wälzlager ausgebildet, bevorzugt als Kugellager oder als Rollenlager. Das Untersetzungsgetriebe ist als Schneckengetriebe ausgebildet.

Vorzugsweise weist der mindestens eine Federarm einen dritten Schenkel auf, welcher zur Längsachse hin weist und das freie Ende bildet. Der Federarm kann dabei vorzugsweise U-förmig oder V-förmig, topf-oder napfförmig ausgebildet sein. Es ist weiterhin denkbar und möglich, die Federarme W-förmig auszubilden.

Vorzugsweise liegt der Grundkörper im eingebauten Zustand in Anlage mit einer schneckenradnahen Stirnseite des zweiten Innenrings. Das Wälzlager kann so vor Beschädigung durch die Federarme geschützt werden. Es ist bevorzugt, dass die Federarme im eingebauten Zustand an der dem zweiten Lager zugewandten Stirnseite des Schneckenrads anliegen, insbesondere an einer Ausnehmung des Schneckenrads, die in der dem zweiten Lager zugewandten Stirnseite angeordnet ist, so dass das Schneckenrad in Längsrichtung und Radialrichtung vorgespannt ist.

Das Federelement ist vorzugsweise so ausgestaltet, dass sich die freien Enden der Federarme auf einer gemeinsamen Seite des Federelementes in Richtung der Längsachse erstrecken.

In einer bevorzugten Ausführungsform ist der Grundkörper des Federelements ringförmig. Am ringförmigen Bereich des Grundkörpers können an der äußeren und/oder inneren Fläche Schlitze angeordnet sein, welche in Umfangsrichtung des Grundkörpers zueinander beabstandet sind. Dadurch kann eine verbesserte Vorspannung des Federelements ermöglicht werden. Der Grundkörper kann eben ausgebildet sein oder gewellt, um den Federweg zu erhöhen. Das Federelement kann als Blechelement mittels Rollierverfahren oder Press-Biegeverfahren ausgebildet sein und mit Kunststoff überzogen werden. Auch die Verwendung von Gleitlack ist denkbar und möglich. Das Federelement ist besonders bevorzugt einstückig ausgebildet, es ist jedoch denkbar und möglich dieses mehrteilig auszubilden.

Es kann vorgesehen sein, dass die freien Enden der Federarme an dem Schneckenrad anliegen, dabei ist es bevorzugt, wenn die freien Enden der Federarme eine Kunststoffbeschichtung aufweisen und so vor Verschleiß geschützt werden.

Es kann aber auch vorgesehen sein, dass die Federarme auf der Außenseite befindliche Kontaktflächen aufweisen, die jeweils durch weiter nach innen zum Grundkörper zurückgebogene Endbereich der Federarme gebildet sind, wobei diese Kontaktflächen in Anlage mit dem Schneckenrad stehen.

Um die Lastverteilung gleichmäßig zu verteilen, sind die Federarme zumindest teilweise in Umfangsrichtung gleichmäßig beabstandet, insbesondere über den gesamten Umfang. Die Federarme sind dabei vorzugsweise symmetrisch zu einer Ebene, die durch die Längsachse aufgespannt ist oder in Umfangsrichtung um die Längsachse um einen definierten Winkel um den Federmittelpunkt versetzt, angeordnet.

Es kann vorgesehen sein, dass auf der Innenumfangsseite des Grundkörpers in Längsrichtung orientierte Nasen angeordnet sind, die das Federelement auf der Welle zentrieren, eine Auflage in Längsrichtung ermöglichen sowie zur Verdrehsicherung vorgesehen sind.

In einer bevorzugten Ausführungsform ist das Federelement einteilig ausgebildet und insbesondere aus einem Blechteil gefertigt. Die Fertigung kann mittels Rollierverfahren oder Press-Biegeverfahren erfolgen.

Vorzugsweise weisen die Federarme im Längsschnitt entlang der Längsachse ein annähernd U-förmiges Profil auf. Es ist weiterhin denkbar und möglich die freien Enden der Federarme am Grundkörper zu schließen, beziehungsweise einen jeden Federarm rohrförmig auszubilden bzw. zu biegen. Besonders bevorzugt sind die Federarme im Längsschnitt asymmetrisch ausgebildet. Dadurch wird ermöglicht, dass keine Kräfte in Radialrichtung wirken und weiterhin die Steifigkeit des Grundkörpers kompensiert werden kann. Weiterhin ist es bevorzugt, dass die Federarme derart umgebogen sind, dass sie sich parallel zur Längsachse erstrecken, um in Längsrichtung eine kraftverteilte und damit spannungsarme Auflage zu ermöglichen. In einer vorteilhaften Ausführungsform weisen die Federarme einen ersten Schenkel auf, der sich von dem Grundkörper aus erstreckt und einen Winkel zur Ebene des Grundkörpers in einem Bereich von 10° bis 30° einschließt. Vorzugsweise weist der Grundkörper eine Dicke in Längsrichtung in einem Bereich von 0,3mm bis 1mm auf. Bevorzugt weist das gesamte Federelement mit den Federarmen eine äußere Dicke in einem Bereich von 6,5mm bis 11mm auf. Vorzugsweise weisen die Federarme eine maximale Breite in Umfangsrichtung in einem Bereich zwischen 5mm und 12mm auf. Es kann vorgesehen sein, dass die Federarme in ihrer Breite zulaufend zur Längsachse ausgestaltet sind, damit Spannungen beim Einfedern gleichmäßig verteilt werden.

Vorzugsweise weist der zweite Schenkel eine Innenumfangsfläche und eine Außenumfangsfläche auf, wobei die Außenumfangsfläche weiter entfernt zu der Längsachse angeordnet ist als die Innenumfangsfläche und an der Außenumfangsfläche von einer zur Längsachse parallelen Tangente berührt wird. Eine zu dieser Tangente parallele Sekante ist durch die Innenumfangsfläche des zweiten Schenkels gebildet, wobei die Innenumfangsfläche näher zur Längsachse angeordnet ist als die Außenumfangsfläche. Die Sekante und die Tangente verlaufen parallel zur Längsachse und sind durch einen Abstand zueinander beabstandet, wobei Dx ≤ 10 · d1 ≥ d1, bevorzugt Dx ≤ 7 · d1 ≥5·d1, wobei d1 der Dicke des Grundkörpers entspricht. Ferner ist bevorzugt, dass vom ersten Schenkel und vom dritten Schenkel jeweils eine Tangente weg von der Längsachse gebildet wird. Zwischen diesen beiden Tangenten liegt der zweite, gebogene, Schenkel. In dem Punkt, wo sich diese beiden Tangenten schneiden, wird ein rechter Winkel gebildet. Die beiden Tangenten bilden, bezogen auf den rechten Winkel, die Ankatheten. Die Gegenkathete wird durch die Tangente oder durch die Sekante gebildet, sodass zwei gleichschenklig-rechtwinklige Dreiecke aufgespannt werden.

In einer Ausführungsform ist der Grundkörper planar ausgebildet. Er kann aber auch angestellt sein bzw. eine gebogene, parabolische oder gewellte Form aufweisen und somit zum Federweg beitragen. Bevorzugt stehen von dem ringförmigen Grundkörper die Federarme in Radialrichtung zur Längsachse nach außen über, wobei die Federarme nach innen zur Grundkörpermitte zurück gebogen oder gekantet sind, so dass sie mit ihren freien Enden einander zur Mitte zugewandt sind.

Es ist auch denkbar, dass der ringförmige Grundkörper keinen mechanisch geschlossenen Verbindungsring aufweist. In diesem Fall gehen die Federarme und mögliche Biegenasen von einem linearen Grundkörper ab. Bei der Herstellung wird der Grundkörper zu einem Ring gebogen. Die biegebalkenähnlichen Federarme werden aus dem Blechteil zu U-förmigen, V-förmigen - mit spitzem oder stumpfen Winkel -, topf- oder napfförmigen Federelementen gebogen, die über den Grundkörper miteinander verbunden sind.

Es kann auch vorgesehen sein, dass der Grundkörper auf beiden Seiten Federarme aufweist, wobei die Federarme dann sowohl an dem Innenring des zweiten Wälzlagers als auch an dem Schneckenrad anliegen.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung eines Schneckengetriebes einer elektromechanischen Servolenkung,
- Figur 2:: eine weitere räumliche Darstellung eines Schneckengetriebes einer Servolenkung gemäß Figur 1,
- Figur 3:: einen Längsschnitt durch das Schneckengetriebe,
- Figur 4,4A,4B,4C:: Ansichten eines Federelements,
- Figur 4d:: ein vergrößerter Ausschnitt X zur Figur 4C,
- Figur 5,5A,5B,5C:: Ansichten einer zweiten Ausführungsform eines Federelements,
- Figur 6,6A,6B:: Ansichten einer dritten Ausführungsform eines Federelements,
- Figur 7:: eine Draufsicht auf ein Federelement einer weiteren Ausführungsform,
- Figur 8:: eine Draufsicht auf ein Federelement einer weiteren Ausführungsform,
- Figur 9:: eine Rückansicht auf ein Federelement einer weiteren Ausführungsform,
- Figur 10:: eine Rückansicht auf ein Federelement einer weiteren Ausführungsform,
- Figur 11:: eine räumliche Ansicht auf ein Federelement einer weiteren Ausführungsform, sowie
- Figur 11a:: eine Seitenansicht auf ein Federelement einer weiteren Ausführungsform.

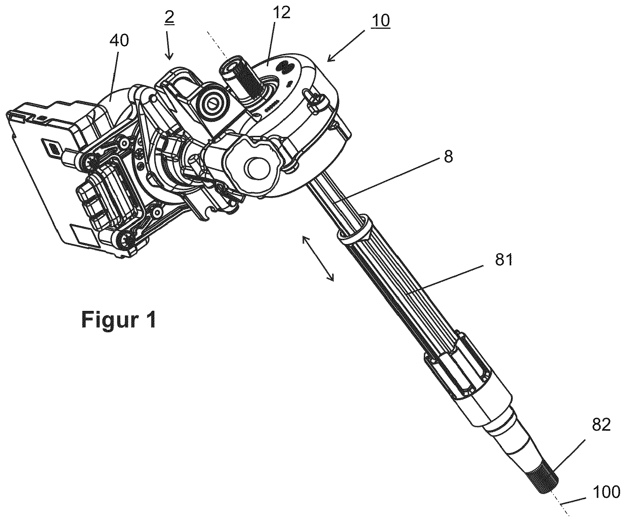

Die Figuren 1 bis 3 zeigen ein Schneckengetriebe 1 als Teil einer elektromechanischen Hilfskraftlenkung, welche ein Hilfsdrehmoment von einem Elektromotor 40 auf eine untere Lenkwelle 2 überträgt. Ein Schneckenrad 3 ist vorgesehen, welches mit der unteren Lenkwelle 2 drehfest verbunden ist. Eine Drehung des Schneckenrades 3 um seine Rotationsachse 100 bewirkt den Eintrag einer Hilfskraft beziehungsweise einer Zusatzkraft auf die Lenkwelle 2, um entsprechend eine Hilfskraft beziehungsweise einen Zusatzlenkwinkel in den Lenkstrang einzubringen.

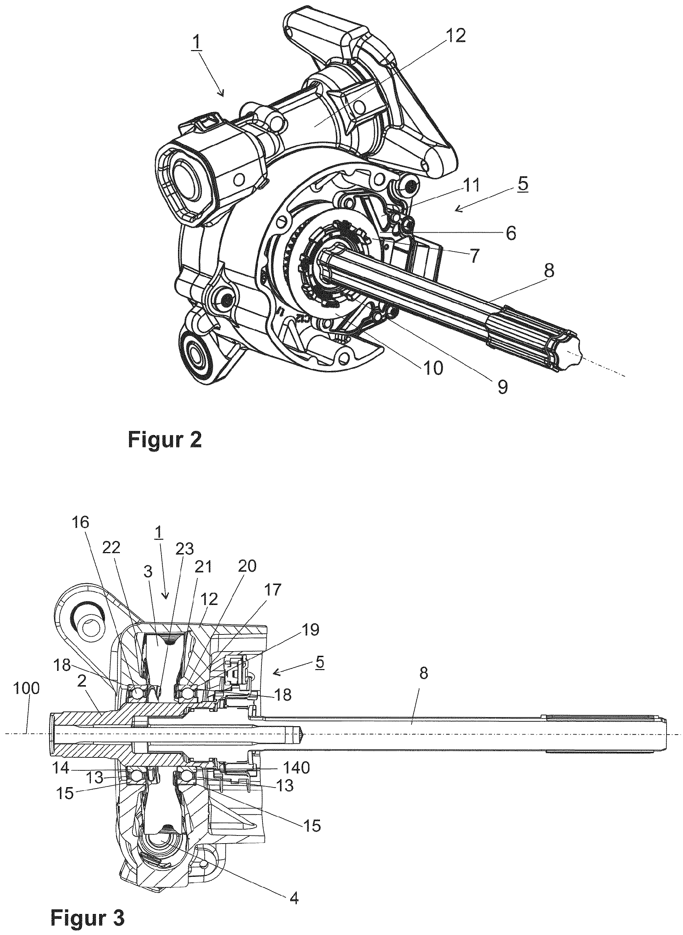

Das Schneckenrad 3 wird über eine Schnecke 4 angetrieben, welche ihrerseits über den Elektromotor 40 angetrieben ist, wobei der Abtrieb des Elektromotors entsprechend zur Drehmomentübertragung mit der Schnecke 4 gekoppelt ist. In der Figur 2 ist weiterhin eine integrale Baueinheit 5 mit einer Drehmomentsensoreinheit 6 und einer Lenkwinkelsensoreinheit 7 vorgesehen. Die Drehmomentsensoreinheit 6 erfasst die Verdrehung einer oberen Lenkwelle 8 gegenüber der unteren Lenkwelle 2 als ein Maß des an der oberen Lenkwelle 8 manuell ausgeübten Drehmomentes. Die Lenkwinkelsensoreinheit 7 hingegen misst den aktuellen Lenkwinkel der unteren Lenkwelle 2. Die Drehmomentsensoreinheit 6 weist einen drehfest mit der oberen Lenkwelle 8 verbunden Ringmagneten 9 (Permanentmagneten) und Magnetflussleiter 10 auf. Eine dazugehörige Sensoreinheit 11 ist raumfest gehalten. Die obere Lenkwelle 8 ist in einem hinteren Lenkwellenteil 81 drehfest, aber in Richtung der Längsachse 100 verstellbar, wie mit dem Doppelpfeil in Figur 1 angedeutet, um ein an einem Befestigungsabschnitt 82 angebrachtes, hier nicht dargestelltes Lenkrad in Längsrichtung zu verstellen.

Wie in Figur 3 dargestellt, ist das Schneckenrad 3 in einem Getriebegehäuse 12 auf seinen beiden Stirnseiten jeweils mittels eines Kugellagers 13 drehbar gelagert. Die Kugellager 13 weisen einen mit der unteren Lenkwelle 2 verbundenen Innenring 14,140 und einen im Getriebegehäuse 12 sitzenden Außenring 15 und Wälzkörper 16 auf. Die Wälzkörper 16 laufen in Rillen zwischen dem Innenring 14,140 und dem Außenring 15. Die Innenringe 14,140 weisen eine innenzylindrische Mantelfläche für einen Festsitz auf der unteren Lenkwelle 2 auf. Die Außenringe 15 sind jeweils in einem Sitz 17 in dem Getriebegehäuse 12 aufgenommen. Der Sitz 17 wird jeweils durch einen um die Längsachse 100 in Umfangsrichtung umlaufenden ringförmigen Absatz 18 im Getriebegehäuse 12 gebildet. Die Absätze 18 dienen als Anlagefläche, die sich in Radialrichtung zur Längsrichtung 100 erstreckt und somit die Orientierung des Kugellagers 13 in Längsrichtung 100 definiert. Die Außenringe 15 liegen somit mit ihren schneckenradfernen Stirnseiten 19 und ihrer Mantelfläche 20 am Getriebegehäuse 12 an. Die Außenringe 15 stehen nicht in Kontakt mit dem Schneckenrad 3. Die Innenringe 14,140 hingegen stützen sich mit ihren schneckenradnahen Stirnseiten 21 an dem Schneckenrad 3 ab. Ein erster Innenring 140 eines ersten Lagers liegt mit seiner schneckenradnahen Stirnseite 21 unmittelbar in Anlage mit einer ersten Stirnseite des Schneckenrades 3. Zwischen einem zweiten Innenring 14 eines zweiten Lagers und einer zweiten Stirnseite des Schneckenrads ist hingegen ein Federelement 22 vorgesehen, das eine konstante Vorspannung auf die umlaufende/ringförmige Fläche des zweiten Innenringes 14 aufbringt. Das Federelement 22 liegt in Anlage mit der schneckenradnahen Stirnseite des zweiten Innenrings 14 und greift in eine um die Längsachse 100 in Umfangsrichtung umlaufende Ausnehmung 23 in der zweiten Stirnseite des Schneckenrads 3 ein.

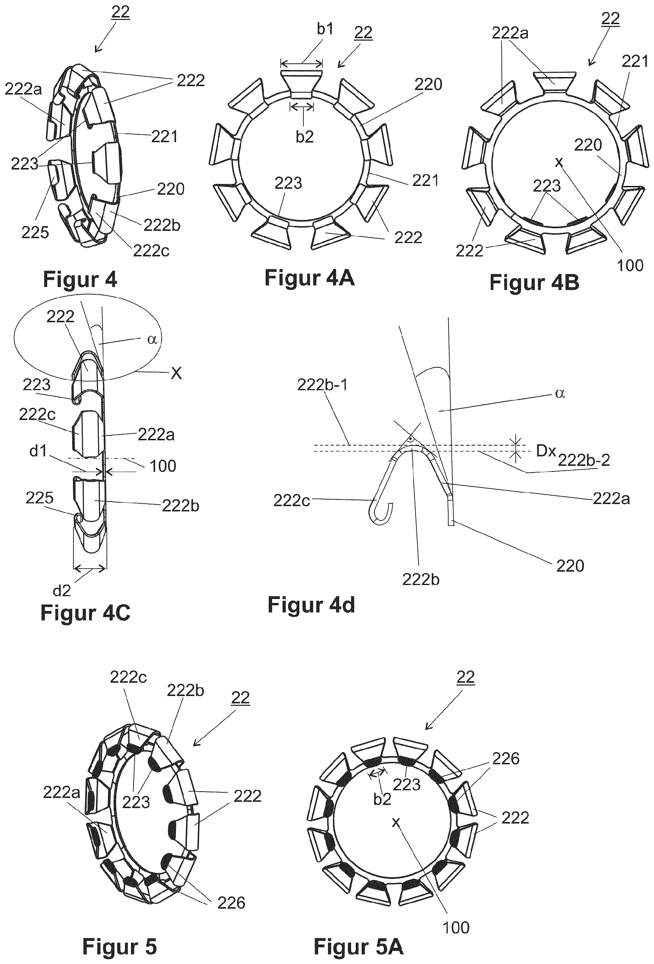

In den Figuren 4 bis 4C ist ein erstes Beispiel eines Federelements 22 dargestellt. Das Federelement 22 ist durch einen ringförmigen Grundkörper 220 gebildet, von dessen Außenumfangsseite 221 im gleichmäßigen Abstand Federarme 222 abgehen. Die Federarme 222 weisen jeweils ein freies Ende 223 auf. Vom Grundkörper 220 ausgehend weist ein erster Schenkel 222a des Federarms 222 nach außen hin weg von der Längsachse 100. Der erste Schenkel 222a geht in einen zweiten Schenkel 222b über, welcher in dieser Ausführungsform eine gebogene Form annimmt. Der zweite Schenkel ist in seinem höchsten Punkt oder in seiner Mitte annährend parallel zu der Längsachse 100. Der zweite Schenkel geht in einen dritten Schenkel 222c des Federarms 222 über, welcher zur Längsachse 100 hinweist. Von dem Grundkörper 220 ausgehend verbreitern sich die Federarme 222 in Umfangsrichtung zur Längsachse bis auf eine maximale Breite b1 und laufen dann in einem Endbereich zum freien Ende 223 hin bis auf eine minimale Breite b2 zu. Der Grundkörper 220 liegt im eingebauten Zustand in Anlage mit dem Innenring und die freien Enden der Federarme 223 stützen sich am Schneckenrad in der Ausnehmung ab.

Von dem ringförmigen Grundkörper 220 stehen die Federarme 222 in Radialrichtung zur Längsachse 100 nach außen über, wobei die Federarme 222 nach innen zur Grundkörpermitte zurück gebogen oder gekantet sind, so dass sie mit ihren freien Enden 223 einander zur Mitte zugewandt sind. Die Federarme 222 weisen somit im Längsschnitt entlang der Längsachse ein annähernd U-förmiges Profil auf. Der erste Schenkel 222a der Federarme 222, der sich von dem Grundkörper 220 aus erstreckt und im Wesentlichen planar ist, schließt einen Winkel α zur Ebene des Grundkörpers ein. Der Bereich mit der maximalen Breite b1 liegt in Radialrichtung am weitesten außen und im zweiten Schenkel 222b. Die freien Enden 223 der Federarme 222 gehen weisen vom dritten Schenkel 222c ab und sind aus der Mitte in Richtung des Grundkörpers beziehungsweise in Richtung der Längsachse 100 nach innen umgebogen, derart, dass sich im Endbereich eine Anlagefläche 225 auf der Oberseite der Federarme 222 mit der minimalen Breite b2 ausbildet, mit der sich die Federarme am Schneckenrad abstützen können. Da die Anlagefläche 225 relativ groß ist, lässt sich der Federsitz gut kontrollieren. Die Federarme 222 sind bevorzugt soweit nach innen gezogen, dass eine radiale Bewegung/Vorspannung möglich ist. Der ringförmige Grundkörper 220 weist eine Dicke d1 in Längsrichtung auf. Das gesamte Federelement mit den Federarmen weist eine äußere Dicke d2 auf, welche in diesem Ausführungsbeispiel den ersten, zweiten und dritten Schenkel 222a-c umfasst. Die maximale Breite b1 der Federarme nimmt bevorzugt einen Wert zwischen 5mm und 12mm an. Die äußere Dicke d2 nimmt bevorzugt einen Wert zwischen 6,5 und 11mm an. Der Winkel α nimmt bevorzugt einen Wert zwischen 10° und 30° an. Die Blechdicke d1 nimmt bevorzugt einen Wert zwischen 0,3 und 1mm an. Die Federarme 222 sind zueinander beabstandet und sind ausschließlich über den Grundkörper miteinander verbunden. Bevorzugt sind die Federarme einstückig an den Grundkörper angebunden.

Figur 4d stellt eine Teilansicht aus Figur 4C dar. Darin ist dargestellt, dass der zweite Schenkel 222b nahezu parallel zu der Längsachse verläuft. Der zweite Schenkel weist eine Innenumfangsfläche und eine Außenumfangsfläche auf, wobei die Außenumfangsfläche weiter entfernt zu der Längsachse angeordnet ist als die Innenumfangsfläche und an der Außenumfangsfläche von einer zur Längsachse parallelen Tangente 222b-1 berührt wird. Eine zu dieser Tangente 222b-1 parallele Sekante 222b-2 ist durch die Innenumfangsfläche des zweiten Schenkels 222b gebildet, wobei die Innenumfangsfläche näher zur Längsachse 100 angeordnet ist als die Außenumfangsfläche. Die Sekante 222b-2 und die Tangente 222b-1 verlaufen parallel zur Längsachse 100 und sind durch einen Abstand Dx zueinander beabstandet, wobei Dx ≤ 10 · d1 ≥ d1, bevorzugt Dx ≤ 7 · d1 ≥5·d1. Weiterhin ist dargestellt, dass vom ersten Schenkel 222a und vom dritten Schenkel 222c jeweils eine Tangente weg von der Längsachse gebildet wird. Zwischen diesen beiden Tangenten liegt der zweite, gebogene, Schenkel 222b. In dem Punkt, wo sich diese beiden Tangenten schneiden, wird ein rechter Winkel gebildet. Die beiden Tangenten bilden, bezogen auf den rechten Winkel, die Ankatheten. Die Gegenkathete wird durch die Tangente 222b-1 oder durch die Sekante 222b-2 gebildet, sodass zwei gleichschenklig-rechtwinklige Dreiecke aufgespannt werden.

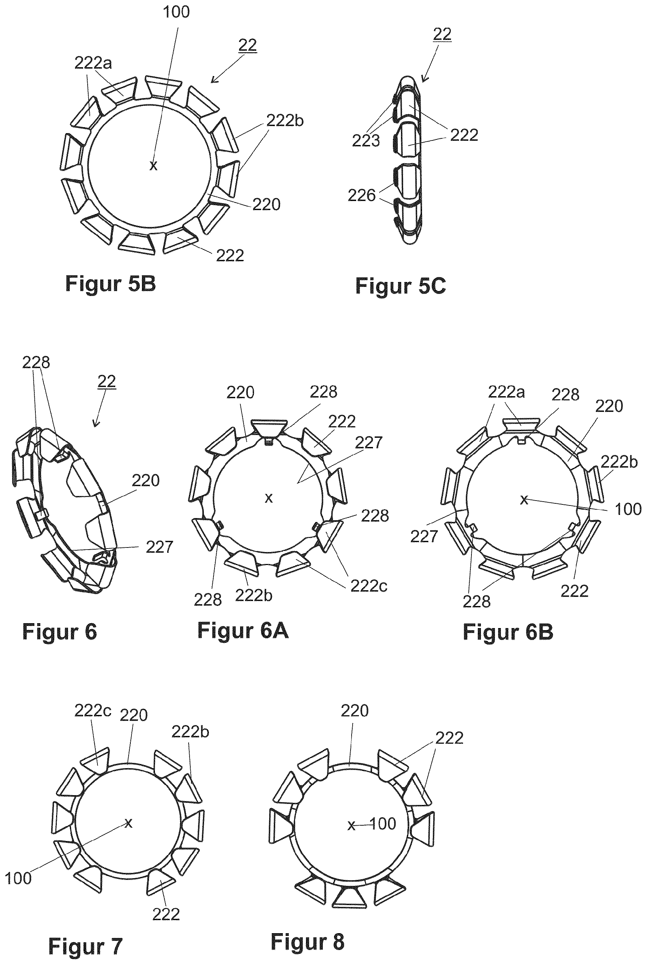

Die Figuren 5 bis 5C zeigen ein weiteres Ausführungsbeispiel eines Federelements 22, das im Wesentlichen dem zuvor beschrieben Federelement entspricht, aber bei dem die freien Enden 223 der Federarme 222 nicht zusätzlich nach innen gebogen sind. Die Stirnflächen der freien Enden 223 liegen somit im eingebauten Zustand an dem Schneckenrad 3 an. Die freien Enden 223 der Federarme 222 laufen spitz bis zu der minimal Breite b2 zu, wodurch Spannungen beim Einfedern gleichmäßig verteilt werden können. Die freien Enden 223 weisen einen Kunststoffüberzug 226 auf, um einen Verschleiß der Federarme 222 zu verhindern.

Hingegen wird in dem Ausführungsbeispiel der Figuren 6 bis 6B auf den Kunststoffüberzug verzichtet. Hier sind auf einer Innenumfangsseite 227 des ringförmigen Grundkörpers 220 in Längsrichtung orientierte Biegenasen 228 zur Zentrierung des Federelements 22 auf der äußeren Lenkwelle sowie zur Verdrehsicherung vorgesehen.

Es ist auch denkbar die Federarme 222 des Federelements 22 in nur teilweise regelmäßigen Abständen in Umfangsrichtung des Grundkörpers 220 anzuordnen, wie dies in den Figuren 7 und 8 dargestellt ist. Die Anordnung kann dabei beispielsweise symmetrisch zu einer Ebene, die durch die Längsachse 100 aufgespannt ist, wie in Figur 7 dargestellt, oder in Umfangsrichtung um die Längsachse 100, um einen definierten Winkel um den Federmittelpunkt versetzt, wie in Figur 8 dargestellt, erfolgen.

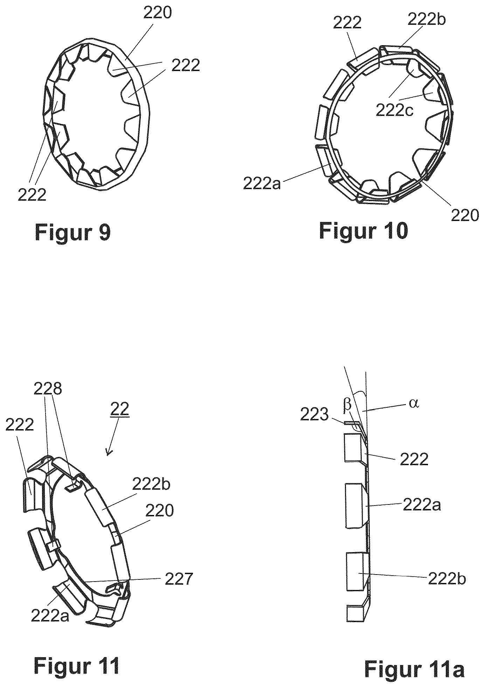

Es kann auch vorgesehen sein, dass der Grundkörper 220 angestellt ist bzw. eine gebogene Form aufweist um ebenfalls zum Federweg beizutragen. In der Figur 9 ist ein solcher Grundköper 220 dargestellt. In dem gezeigten Ausführungsbeispiel erstrecken sich von beiden Seiten des Grundkörpers 220 im Wesentlichen dreieckige, planare Federarme 222 in Richtung der Längsachse 100. Bei diesem Ausführungsbeispielen liegen die Federarme der einen Seite an dem Schneckenrad und die Federarme der anderen Seite an dem Innenring des Lagers an.

Figur 10 zeigt ein weiteres Ausführungsbeispiel, bei dem der ringförmige Grundkörper 220 beinahe drahtförmig ausgestaltet ist und im Profil U-förmige Federarme 222 an einem ihrer Schenkel 222a-c auf der Außenseite mit dem Grundkörper 220 verbunden sind, in diesem Beispiel der erste Schenkel 222a. Dabei liegt der Grundkörper 220 im Mittenbereich des ersten Schenkels 222a, zwischen dessen freien Ende und zwischen dem zweiten Schenkel 222b. Der Federarm 222 ragt dabei über den Grundkörper 220 in Richtung der Längsachse 100 über. Die Federarme 222 erstrecken sich, wie bei den anderen Ausführungsformen in Richtung der Federmitte.

Es ist weiterhin bevorzugt, dass das Federelement 22 nur aus dem ersten Schenkel 222a und dem zweiten Schenkel 222b besteht, wie in Figur 11 und 11a dargestellt ist, um in Längsrichtung eine kraftverteilte und damit spannungsarme Auflage zu ermöglichen. Dabei geht der erste Schenkel 222a vom Grundkörper 220 weg und erstreckt sich im Wesentlichen planar und schließt einen Winkel α zur Ebene des Grundkörpers 220 ein. Vom ersten Schenkel 222a geht der zweite Schenkel 222b ab und bildet das freie Ende 223. Der zweite Schenkel ist dabei planar, wie in Figur 11a, dargestellt, und damit parallel zur Längsachse ausgebildet. Der erste Schenkel 222a und der zweite Schenkel 222b spannen dabei einen Winkel β auf, welcher kleiner oder gleich 180° ist und grösser als α ist. Der erste und der zweite Schenkel 222a, 222b nehmen bevorzugt eine V-Form an, wie in Figur 11a dargestellt. Der zweite Schenkel 222b kann auch eine gebogene Form annehmen, wie in Figur 11 zu sehen. Dabei bildet der zweite Schenkel eine U-Form und ist in derart gebogen, dass der zweite Schenkel 222b annährend parallel zur Längsachse ist. Bevorzugt ist das Federelement einteilig ausgebildet, was die Montage vereinfacht und eine Reibung zwischen Bauteilkomponenten und eine damit einhergehende Geräuschentwicklung verhindert. Das Federelement kann aber auch mehrteilig ausgebildet sein. Zudem weist das Federelement eine symmetrische Lastverteilung (auch wenn die Last über den Umfang nicht konstant sein kann) auf. Die Herstellung kann durch einen Biegeprozess eines einzigen Blechteils erfolgen. Im Vergleich zu Tellerfedern kann bei dem Grundkonzept eines Biegebalkens eine niedrige Spannung in tangentialer Richtung realisiert werden. Eine Bewegung der Feder auf dem Federsitz in radialer Richtung wird unterbunden, was zu einem guten NVH-Verhalten führt.

Es ist auch denkbar, dass der ringförmige Grundkörper keinen mechanisch geschlossenen Verbindungsring aufweist. In diesem Fall gehen die Federarme und mögliche Biegenasen von einem linearen Grundkörper ab. Bei der Herstellung wird der Grundkörper zu einem Ring gebogen. Die biegebalkenähnlichen Federarme werden aus dem Blechteil zu U-förmigen FederElementen gebogen, die über den Grundkörper miteinander verbunden sind.

Der Grundkörper kann eben ausgebildet sein oder gewellt, um den Federweg zu erhöhen. Das Federelement kann als Blechelement mittels Rollierverfahren oder Press-Biegeverfahren ausgebildet sein und mit Kunststoff überzogen werden. Auch die Verwendung von Gleitlack ist denkbar und möglich. Das Federelement ist besonders bevorzugt einstückig ausgebildet, es ist jedoch denkbar und möglich dieses mehrteilig auszubilden.

Es ist weiterhin denkbar und möglich die freien Enden der Federarme zu schließen, um damit eine vereinfachte Montage zu gewährleisten, da sich dadurch beispielsweise kein Schüttgut verfangen kann.

Durch die erfindungsgemäße Feder kann ein Axialspiel, Toleranzen und Wärmeausdehnungen ausgeglichen werden.

## Patentansprüche

1. Elektromechanisches Lenksystem für ein Kraftfahrzeug, mit einem eine Schnecke (4) und ein Schneckenrad (3) umfassenden Untersetzungsgetriebe (1), wobei das Schneckenrad (3) in einem Getriebegehäuse (12) auf einer ersten Stirnseite in einem ersten Lager (13) und auf einer zweiten Stirnseite in einem zweiten Lager (13) um eine Längsachse (100) drehbar gelagert ist, wobei beide Lager (13) einen Außenring (15) und einen Innenring (14,140) aufweisen, zwischen denen Wälzkörper (16) angeordnet sind, wobei die Innenringe (14,140) auf einer von dem Schneckenrad (3) angetriebenen Welle (2) drehfest angeordnet sind und die Außenringe (15) im Getriebegehäuse (12) sitzen, und wobei in Richtung der Längsachse (100) zwischen dem Innenring (140) des zweiten Lagers (13) und dem Schneckenrad (3) ein Federelement (22) angeordnet ist, **dadurch gekennzeichnet, dass** das Federelement (22) einen zumindest teilringförmigen Grundkörper (220) aufweist, der sich im eingebauten Zustand koaxial zur Längsachse (100) erstreckt und von dessen Außenumfangsseite (221) in Umfangsrichtung zur Längsachse (100) beabstandete Federarme (222) abgehen, wobei mindestens ein Federarm (222) ein freies Ende (223) aufweist, wobei der Federarm einen ersten Schenkel (222a) umfasst, welcher weg von der Längsachse (100) weist, und einen zweiten Schenkel (222b) umfasst, welcher zumindest teilweise parallel zu der Längsachse (100) verläuft, an welchem das freie Ende (223) ausgebildet ist.

2. Elektromechanisches Lenksystem nach Anspruch 1, **dadurch gekennzeichnet, dass** der mindestens eine Federarm (222) einen dritten Schenkel (222c) umfasst, welcher zur Längsachse (100) hin weist und welcher das freie Ende (223) bildet.

3. Elektromechanisches Lenksystem nach Anspruch 1 oder 2, **dadurch gekennzeichnet, dass** der Grundkörper (220) im eingebauten Zustand in Anlage mit einer schneckenradnahen Stirnseite des zweiten Innenrings (140) steht.

4. Elektromechanisches Lenksystem nach Anspruch 1 bis 3, **dadurch gekennzeichnet, dass** die Federarme (222) im eingebauten Zustand an der dem zweiten Lager (13) zugewandten Stirnseite des Schneckenrads (3) anliegen.

5. Elektromechanisches Lenksystem nach einem der vorhergehenden Ansprüche, **dadurch gekennzeichnet, dass** sich die freien Enden (223) der Federarme (222) auf einer gemeinsamen Seite des Federelementes (22) in Richtung der Längsachse (100) erstrecken.

6. Elektromechanisches Lenksystem nach einem der vorhergehenden Ansprüche, **dadurch gekennzeichnet, dass** der Grundkörper (220) des Federelements (22) ringförmig ist.

7. Elektromechanisches Lenksystem nach einem der vorhergehenden Ansprüche, **dadurch gekennzeichnet, dass** die Federarme (222) an einer Ausnehmung (23) des Schneckenrads (3), die in der dem zweiten Lager (13) zugewandten Stirnseite angeordnet ist, anliegen und das Schneckenrad (3) in Längsrichtung und Radialrichtung vorspannen.

8. Elektromechanisches Lenksystem nach einem der vorhergehenden Ansprüche, **dadurch gekennzeichnet, dass** die freien Enden (223) der Federarme (222) an dem Schneckenrad (3) anliegen.

9. Elektromechanisches Lenksystem nach einem der vorhergehenden Ansprüche, **dadurch gekennzeichnet, dass** die freien Enden (223) der Federarme (222) eine Kunststoffbeschichtung aufweisen.

10. Elektromechanisches Lenksystem nach einem der vorhergehenden Ansprüche, **dadurch gekennzeichnet, dass** die Federarme (222) zumindest teilweise in Umfangsrichtung gleichmäßig beabstandet sind.

11. Elektromechanisches Lenksystem nach einem der vorhergehenden Ansprüche, **dadurch gekennzeichnet, dass** auf der Innenumfangsseite (227) des Grundkörpers (220) in Längsrichtung (100) orientierte Nasen (228) angeordnet sind, die das Federelement (22) auf der Welle (2) zentrieren.

12. Elektromechanisches Lenksystem nach einem der vorhergehenden Ansprüche, **dadurch gekennzeichnet, dass** das Federelement (22) einteilig ausgebildet ist und aus einem Blechteil gefertigt ist.

13. Elektromechanisches Lenksystem nach einem der vorhergehenden Ansprüche, **dadurch gekennzeichnet, dass** die Federarme (222) im Längsschnitt entlang der Längsachse (100) ein annähernd U-förmiges Profil aufweisen.

14. Elektromechanisches Lenksystem nach einem der vorhergehenden Ansprüche, **dadurch gekennzeichnet, dass** der erste Schenkel (222a) der Federarme (222), der sich von dem Grundkörper (220) aus erstreckt und im Wesentlichen planar ist, einen Winkel (α) zur Ebene des Grundkörpers (220) in einem Bereich von 10° bis 30° einschließt.

15. Elektromechanisches Lenksystem nach einem der vorhergehenden Ansprüche, **dadurch gekennzeichnet, dass** der Grundkörper (220) eine Dicke (d1) in Längsrichtung in einem Bereich von 0,3 bis 1mm aufweist.

16. Elektromechanisches Lenksystem nach einem der vorhergehenden Ansprüche, **dadurch gekennzeichnet, dass** das gesamte Federelement (22) mit den Federarmen (222) eine äußere Dicke (d2) in einem Bereich von 6,5 bis 11mm aufweist.

17. Elektromechanisches Lenksystem nach einem der vorhergehenden Ansprüche, **dadurch gekennzeichnet, dass** die Federarme (222) eine maximale Breite (b1) in Umfangsrichtung in einem Bereich zwischen 5mm und 12mm aufweisen.

18. Elektromechanisches Lenksystem nach einem der vorhergehenden Ansprüche, **dadurch gekennzeichnet, dass** die Federarme (222) in ihrer Breite zulaufend zur Längsachse (100) ausgestaltet sind.

19. Elektromechanisches Lenksystem nach einem der vorhergehenden Ansprüche, **dadurch gekennzeichnet, dass** der Grundkörper (220) planar ist.

## Claims

1. An electromechanical steering system for a motor vehicle, having a reduction gearbox (1) comprising a worm (4) and a worm gear (3), wherein the worm gear (3) in a gearbox housing (12) is mounted in a first bearing (13) at a first end side and in a second bearing (13) at a second end side so as to be rotatable about a longitudinal axis (100), wherein both bearings (13) have an outer ring (15) and an inner ring (14, 140) between which rolling elements (16) are disposed, wherein the inner rings (14, 140) are disposed so as to be rotationally fixed on a shaft (2) that is driven by the worm gear (3), and the outer rings (15) sit in the gearbox housing (12), and wherein, when viewed in the direction of the longitudinal axis (100), a spring element (22) is disposed between the inner ring (140) of the second bearing (13) and the worm gear (3), **characterized in that** the spring element (22) has an at least partially annular main body (220) which in the installed state extends coaxially with the longitudinal axis (100), spring arms (222) which in the circumferential direction are spaced apart from the longitudinal axis (100) emanating from the external circumferential side (221) of said main body (220), wherein at least one spring arm (222) has a free end (223), wherein the spring arm comprises a first leg (222a) which points away from the longitudinal axis (100), and comprises a second leg (222b) which runs so as to be at least partially parallel to the longitudinal axis (100) and on which the free end (223) is configured.

2. The electromechanical steering system as claimed in claim 1, **characterized in that** the at least one spring arm (222) comprises a third leg (222c) which points toward the longitudinal axis (100) and which forms the free end (223).

3. The electromechanical steering system as claimed in claim 1 or 2, **characterized in that** the main body (220) in the installed state lies against an end side of the second inner ring (140) that is proximal to the worm gear.

4. The electromechanical steering system as claimed in claims 1 to 3, **characterized in that** the spring arms (222) in the installed state lie against the end side of the worm gear (3) that faces the second bearing (13).

5. The electromechanical steering system as claimed in one of the preceding claims, **characterized in that** the free ends (223) of the spring arms (222) on a common side of the spring element (22) extend in the direction of the longitudinal axis (100).

6. The electromechanical steering system as claimed in one of the preceding claims, **characterized in that** the main body (220) of the spring element (22) is annular.

7. The electromechanical steering system as claimed in one of the preceding claims, **characterized in that** the spring arms (222) lie against a clearance (23) of the worm gear (3) that is disposed in the end side that faces the second bearing (13), preloading the worm gear (3) in the longitudinal direction and the radial direction.

8. The electromechanical steering system as claimed in one of the preceding claims, **characterized in that** the free ends (223) of the spring arms (222) lie against the worm gear (3).

9. The electromechanical steering system as claimed in one of the preceding claims, **characterized in that** the free ends (223) of the spring arms (222) have a plastics material coating.

10. The electromechanical steering system as claimed in one of the preceding claims, **characterized in that** the spring arms (22) are at least in part uniformly spaced apart in the circumferential direction.

11. The electromechanical steering system as claimed in one of the preceding claims, **characterized in that** cams (228) which are oriented in the longitudinal direction (100) and center the spring element (22) on the shaft (2) are disposed on the internal circumferential side (227) of the main body (220).

12. The electromechanical steering system as claimed in one of the preceding claims, **characterized in that** the spring element (22) is configured so as to be integral and made from a sheet-metal part.

13. The electromechanical steering system as claimed in one of the preceding claims, **characterized in that** the spring arms (222), when viewed in the longitudinal section along the longitudinal axis (100), have an approximately U-shaped profile.

14. The electromechanical steering system as claimed in one of the preceding claims, **characterized in that** the first leg (222a) of the spring arms (222), that extends from the main body (220) and is substantially planar, in relation to the plane of the main body (220) encloses an angle (α) in a range from 10° to 30°.

15. The electromechanical steering system as claimed in one of the preceding claims, **characterized in that** the main body (220) in the longitudinal direction has a thickness (d1) in a range from 0.3 to 1 mm.

16. The electromechanical steering system as claimed in one of the preceding claims, **characterized in that** the entire spring element (22) having the spring arms (222) has an external thickness (d2) in a range from 6.5 to 11 mm.

17. The electromechanical steering system as claimed in one of the preceding claims, **characterized in that** the spring arms (222) in the circumferential direction have a maximum width (b1) in a range between 5 mm and 12 mm.

18. The electromechanical steering system as claimed in one of the preceding claims, **characterized in that** the spring arms (222) in terms of the width thereof are designed so as to taper toward the longitudinal axis (100).

19. The electromechanical steering system as claimed in one of the preceding claims, **characterized in that** the main body (220) is planar.

## Revendications

1. Système de direction électromécanique pour un véhicule automobile, comportant un réducteur (1) comprenant une vis sans fin (4) et une roue à vis sans fin (3), la roue à vis sans fin (3) étant montée rotative autour d'un axe longitudinal (100) dans un carter de transmission (12) dans un premier palier (13) sur un premier côté frontal et dans un deuxième palier (13) sur un deuxième côté frontal, les deux paliers (13) présentant une bague extérieure (15) et une bague intérieure (14, 140) entre lesquelles des corps de roulement (16) sont disposés, les bagues intérieures (14, 140) étant disposées de manière solidaire en rotation sur un arbre (2) entraîné par la roue à vis sans fin (3) et les bagues extérieures (15) reposant dans le carter de transmission (12), et un élément ressort (22) étant disposé entre la bague intérieure (140) du deuxième palier (13) et la roue à vis sans fin (3) dans la direction de l'axe longitudinal (100), **caractérisé en ce que** l'élément ressort (22) présente un corps de base (220) au moins en forme d'anneau partiel, lequel corps de base s'étend coaxialement à l'axe longitudinal (100) dans l'état installé et des bras de ressort (222) espacés dans la direction périphérique par rapport à l'axe longitudinal (100) partant du côté périphérique extérieur (221) du corps de base, au moins un bras de ressort (222) présentant une extrémité libre (223), le bras de ressort comprenant une première branche (222a), laquelle est détournée de l'axe longitudinal (100), et comprenant une deuxième branche (222b), laquelle s'étend au moins partiellement parallèlement à l'axe longitudinal (100), deuxième branche niveau de laquelle l'extrémité libre (223) est réalisée.

2. Système de direction électromécanique selon la revendication 1, **caractérisé en ce que** l'au moins un bras de ressort (222) comprend une troisième branche (222c), laquelle est tournée vers l'axe longitudinal (100) et laquelle forme l'extrémité libre (223).

3. Système de direction électromécanique selon la revendication 1 ou 2, **caractérisé en ce que** le corps de base (220) est, dans l'état installé, en appui contre un côté frontal, proche de la roue à vis sans fin, de la deuxième bague intérieure (140).

4. Système de direction électromécanique selon les revendications 1 à 3, **caractérisé en ce que** les bras de ressort (222) s'appuient, dans l'état installé, contre le côté frontal, tourné vers le deuxième palier (13), de la roue à vis sans fin (3).

5. Système de direction électromécanique selon l'une des revendications précédentes, **caractérisé en ce que** les extrémités libres (223) des bras de ressort (222) s'étendent sur un côté commun de l'élément ressort (22) dans la direction de l'axe longitudinal (100).

6. Système de direction électromécanique selon l'une des revendications précédentes, **caractérisé en ce que** le corps de base (220) de l'élément ressort (22) est en forme d'anneau.

7. Système de direction électromécanique selon l'une des revendications précédentes, **caractérisé en ce que** les bras de ressort (222) s'appuient contre un évidement (23) de la roue à vis sans fin (3), lequel évidement est disposé dans le côté frontal tourné vers le deuxième palier (13), et précontraignent la roue à vis sans fin (3) dans la direction longitudinale et la direction radiale.

8. Système de direction électromécanique selon l'une des revendications précédentes, **caractérisé en ce que** les extrémités libres (223) des bras de ressort (222) s'appuient contre la roue à vis sans fin (3).

9. Système de direction électromécanique selon l'une des revendications précédentes, **caractérisé en ce que** les extrémités libres (223) des bras de ressort (222) présentent un revêtement en matière synthétique.

10. Système de direction électromécanique selon l'une des revendications précédentes, **caractérisé en ce que** les bras de ressort (222) sont espacés régulièrement au moins partiellement dans la direction périphérique.

11. Système de direction électromécanique selon l'une des revendications précédentes, **caractérisé en ce que** des ergots (228) orientés dans la direction longitudinale (100) sont disposés sur le côté périphérique intérieur (227) du corps de base (220), lesquels ergots centrent l'élément ressort (22) sur l'arbre (2).

12. Système de direction électromécanique selon l'une des revendications précédentes, **caractérisé en ce que** l'élément ressort (22) est réalisé d'un seul tenant et est fabriqué à partir d'une pièce en tôle.

13. Système de direction électromécanique selon l'une des revendications précédentes, **caractérisé en ce que** les bras de ressort (222) présentent un profil approximativement en forme de U dans la section longitudinale le long de l'axe longitudinal (100).

14. Système de direction électromécanique selon l'une des revendications précédentes, **caractérisé en ce que** la première branche (222a) des bras de ressort (222), qui s'étend à partir du corps de base (220) et est sensiblement plane, forme un angle (α) par rapport au plan du corps de base (220) dans une plage de 10° à 30°.

15. Système de direction électromécanique selon l'une des revendications précédentes, **caractérisé en ce que** le corps de base (220) présente une épaisseur (d1) dans la direction longitudinale dans une plage de 0,3 à 1mm.

16. Système de direction électromécanique selon l'une des revendications précédentes, **caractérisé en ce que** l'ensemble de l'élément ressort (22) doté des bras de ressort (222) présente une épaisseur extérieure (d2) dans une plage de 6,5 à 11mm.

17. Système de direction électromécanique selon l'une des revendications précédentes, **caractérisé en ce que** les bras de ressort (222) présentent une largeur maximale (b1) dans la direction périphérique dans une plage entre 5mm et 12mm.

18. Système de direction électromécanique selon l'une des revendications précédentes, **caractérisé en ce que** les bras de ressort (222) sont configurés de manière à s'effiler en largeur vers l'axe longitudinal (100).

19. Système de direction électromécanique selon l'une des revendications précédentes, **caractérisé en ce que** le corps de base (220) est plan.
